# EUROPEAN PATENT APPLICATION

(11) **EP 3 957 219 A1**
(43) Date of publication of application: **23.02.2022**
(21) Application number: 21190394.3
(22) Date of filing: 09.08.2021
(51) Int. Cl.: A47J 37/06

(54) **AIR COOKING DEVICE**

(30) Priority: 10.08.2020 CN 202010796718
(71) Applicant: Instant Brands Holdings Inc., Downers Grove, IL 60515 (US)
(72) Inventor: WANG, Jiwei, Ottowa (CA); HAN, Yude, Zhejiang (CN); WANG, Hongyuan, Hangzhou (CN)
(74) Representative: Zacco Denmark A/S

(57) **Abstract**

An air cooking device is equipped with a cooking cavity and includes a heating device located above the cooking cavity, a temperature measuring device, and a fan, wherein the fan is used to suck up the wind in the cooking cavity and blow it towards the heating device, and the hot air blows to the cooking cavity to cook food. The temperature measuring device is used to detect the temperature in the cooking cavity. The air cooking device also includes a shielding cover between the heating device and the temperature measuring device, where the shielding cover shields the heating device from radiating to and heating the temperature measuring device, so as to improve the accuracy of the temperature measurement of the temperature measuring device.

## Description

### Field

This application is related to the field of small household appliances, and particularly related to an air cooking device.

### Background

Air cooking devices are being used by more and more consumers. Different from the conventional method of frying with hot oil, air cooking devices use air as a heat transfer carrier to effectively reduce the oil content of the ingredients and provide users with a healthy diet. The current air cooking devices can be basically divided into two types: drawer type and clamshell type. The relevant drawer type air cooking device includes a light-wave tube and a temperature measuring device. However, the light emitted by the light-wave tube can easily render the temperature measurement by the temperature measuring device inaccurate.

### Summary of the Description

This application provides an air cooking device that improves the accuracy of temperature measurement by a temperature measuring device.

More specifically, this application provides an air cooking device with a cooking cavity, and includes a heating device located above the cooking cavity, a temperature measuring device and a fan, wherein the fan is used to suck up air in the cooking cavity and blow it toward the heating device, and the hot air blows to the cooking cavity to cook food. The temperature measuring device is used to detect the temperature in the cooking cavity. The air cooking device also includes a shielding cover between the heating device and the temperature measuring device. The shielding cover shields the heating device from radiating to and heating the temperature measuring device.

Further, the shielding cover may include an arc-shaped shielding portion, where the shielding portion is arranged around the periphery of the temperature measuring device.

Further, the shielding cover may include a first shielding piece and a second shielding piece connected together, wherein the temperature measuring device is located in the space enclosed by the first shielding piece and second shielding piece. The included angle between the first shielding piece and second shielding piece may be an acute angle, where the end point of the acute angle faces toward a wind direction, and the angle bisector of the included angle is roughly parallel to the wind direction of the wind blown by the fan to thereby reduce the resistance of the shielding cover to the wind blown by the fan.

Further, the included angle between the angle bisector of the included angle between the first shielding piece and the second shielding piece and the wind direction of the wind blown by the fan may be greater than or equal to 0 degrees and less than or equal to 20 degrees.

Further, the fan may be a centrifugal fan, where the blades of the centrifugal fan are at an acute angle to the radial direction, so that the wind from the centrifugal fan and the radial direction of the centrifugal fan are at an acute angle, wherein the angle bisector of the included angle between the first shielding piece and second shielding piece and the radial radiation direction of the centrifugal fan may be greater than or equal to 10 degrees to less than or equal to 80 degrees.

Further, the heating device may include a light-wave tube, wherein the light-wave tube may be arranged as a superior arc, having the two ends of the superior arc as two wire-outgoing ends of the light-wave tube, and the temperature measuring device is set between the two wire-outgoing ends.

Further, the air cooking device may include a transparent portion located above the cooking cavity, wherein the transparent portion is in a ring shape and surrounds the fan and heating device to facilitate the observation of the cooking in the cooking cavity.

Further, the air cooking device may include a protective cover under the fan, wherein the protective cover includes an air inlet, an air outlet, and a shielding portion located between the air inlet and the air outlet. The shielding portion may be located under the light-wave tube, to shield the light emitted by the light-wave tube, to thereby prevent the light emitted by the light-wave tube from directly irradiating the food in the cooking cavity.

Further, the light-wave tube may be arranged around the periphery of the fan.

Further, the position of the air outlet may be lower than the position of the air inlet.

The air cooking device of this application may include a shielding cover located between the heating device and the temperature measuring device to shield the heating device from radiating to and heating the temperature measuring device, so as to improve the accuracy of temperature measurement by the temperature measuring device.

### Brief Description of the Drawings

Fig. 1 is an exploded view of the air cooking device in the implementation of this application, in which only some parts of the air cooking device are shown.
Fig. 2 is a schematic cross-sectional view of the assembled air cooking device shown in the Fig. 1, in which the arrow indicates the wind direction.
Fig. 3 is an enlarged view of the circled part of the cross-sectional schematic view shown in the Fig 2.
Fig. 4 is the assembly diagram of the air cooking device shown in the Fig. 1.
Fig. 5 is an enlarged view of the circled part of the air cooking device shown in the Fig. 4.
Fig. 6 is an assembly diagram of another embodiment of the air cooking device shown in the Fig. 4.
Fig. 7 is an enlarged view of the circled part of the assembly part of the air cooking device shown in the Fig. 6.
Fig. 8 is the front view of the air cooking device shown in the Fig. 6, in which the arrow indicates the wind direction.
Fig. 9 is an enlarged view of the circled part of the air cooking device shown in the Fig. 8.

### Detailed Description

Here, exemplary implementations will be explained in detail, and examples thereof are shown in the attached figures. When the following description refers to the attached figures, unless otherwise indicated, the same numbers in different attached figures indicate the same or similar elements. The implementations described in the following exemplary implementations do not represent all implementations consistent with this application. On the contrary, they are only examples of devices that are consistent with some aspects of this application.

The terminology used in this application is only for the purpose of describing specific implementations, and is not intended to limit this application. Unless otherwise defined, the technical or scientific terms used in this application shall have the usual meanings understood by those with general skills in the field to which this application belongs. "First", "second" and similar words used in this application do not indicate any order, quantity or importance, but are only used to distinguish different components. Similarly, words such as "one piece" or "one", etc. do not mean a quantity limit, but mean that there is at least one. "Multiple pieces" or "several" means two or more. Unless otherwise indicated, similar words such as "front", "rear", "lower" and/or "upper" are only for convenience of description, and are not limited to one position or one spatial orientation. "Including" or "containing" and other similar words mean that the elements or items appearing before the word "including" or "containing" cover the elements or items appearing after "including" or "containing" and their equivalents, and do not exclude other elements or items. Similar words such as "connecting" or "coupling" are not limited to physical or mechanical connections, and may include electrical connections, no matter whether it is direct or indirect. The singular forms of "a kind," "the," and "this" used in this application are also intended to include plural forms, unless the context clearly indicates other meanings. It should also be understood that the term "and/or" as used herein refers to and includes any or all possible combinations of one or more associated listed items.

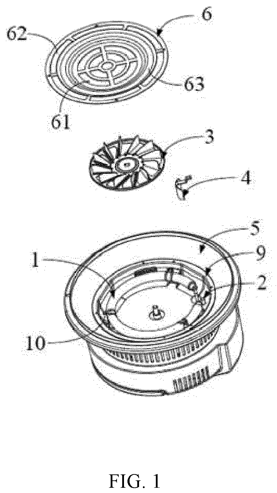

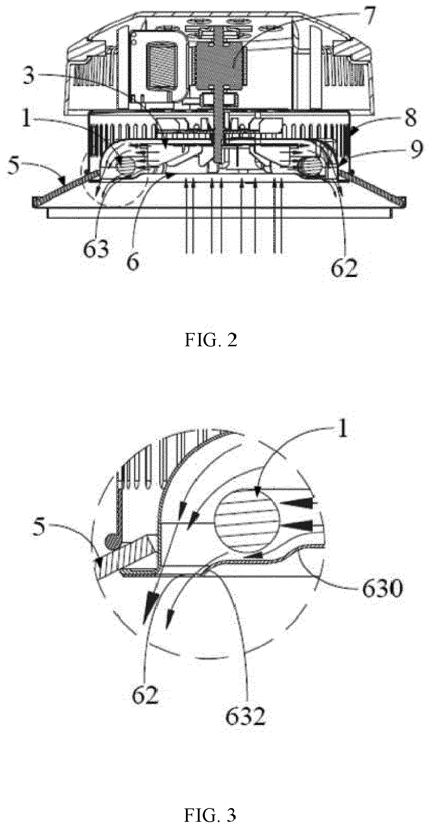

As shown in Fig. 1 to Fig. 3, the air cooking device disclosed in this application can be an air fryer or other oven that may be designed with an air frying function. The air cooking device can be a drawer type or a clamshell type. The air cooking device is equipped with a cooking cavity and includes a heating device 1 located above the cooking cavity, a temperature measuring device 2, a fan 3, a shielding cover 4, a transparent portion 5, a protective cover 6 and a motor 7. The fan 3 is assembled to the motor 7, and the motor 7 drives the fan 3 to rotate. The fan 3 is used to suck up air in the cooking cavity and blow it toward the heating device 1. Hot air is then blown toward the cooking cavity to cook food therein. The temperature measuring device 2 is used to detect the temperature in the cooking cavity to control the heating device 1 to stop heating and prevent overcooking of food ingredients.

The air cooking device includes an upper shell 8 and a lower shell 9. The motor 7 is located above the upper shell 8 and the fan 3 is located below the lower shell 9. One end of the transparent portion 5 is clamped and fixed between the upper shell 8 and the lower shell 9 to fix the transparent portion 5. The material of the transparent portion 5 can be glass or the like. The transparent portion 5 is in a ring shape and surrounds the fan 3 and the heating device 1 to facilitate the observation of the cooking situation in the cooking cavity. The heating device 1 can be a light-wave tube. The light emitted by the heating device 1 can not only play a heating function, but also illuminate the cooking space, so as to facilitate the observation of the cooking in the cooking cavity. The shaft portion of the motor 7 passes through the upper shell 8 and the lower shell 9 and is then fixed with the fan 3 so that the motor 7 can drive the fan 3 to rotate.

The protective cover 6 can be fixed to the lower shell 9 by bolts, etc., to facilitate the assembly and disassembly of the protective cover 6. The protective cover 6 includes an air inlet 61, an air outlet 62, and a shielding portion 63 located between the air inlet 61 and the air outlet 62. The shielding portion 63 is located under the light-wave tube to shield the light emitted by the light-wave tube and prevent the light emitted by the light-wave tube from directly irradiating the ingredients in the cooking cavity, causing the situation in which the ingredients are not completely cooked, but the surface of the ingredients is burnt.

The light-wave tube is detachably fixed to the lower shell 9 through multiple metal locking buckles 10. The light-wave tube is arranged as a superior arc (*i.e.,* an arc extending more than 180 degrees) around the periphery of the fan 3, which facilitates the wind passing through the air inlet 61 to pass around the light-wave tube, which is beneficial to the wind heating. The lowest point of the fan 3 is higher than the lowest point of the light-wave tube and lower than the highest point of the light-wave tube to prevent the wind from the air inlet 61 from passing under the light-wave tube, potentially causing the situation in which the ingredients would not be heated.

The shielding portion 63 includes a separating portion 630 that extends from the lower side of the heating device 1 to the inner side of the heating device 1 and is positioned upwardly close or proximal to the lower side of the fan 3. The separating portion 630 prevents the wind blown by the fan 3 to the heating device 1 from directly returning to the air inlet 61 without passing through the heating device 1. The shielding portion 63 also includes a guiding portion 632 that extends from the lower side of the heating device 1 to the outer side of the heating device 1 and is positioned downwardly away from the fan 3. The guiding portion 632 keeps the hot air passing through the heating device 1 away from the air inlet 61 as far as possible. The position of the air outlet 62 is lower than that of air inlet 61. The shielding portion 63 has the function of guiding the wind, so that the wind in the cooking space is sucked through the air inlet 61 and heated by the heating device 1, and then directed by the blades of the fan 3 to the side wall of the lower shell 9, and through the guiding structure of the separating portion 630 and the guiding portion 632, such that the wind is blown smoothly to the ingredients in the cooking space, which can better heat the food, and at the same time, reduce wind noise.

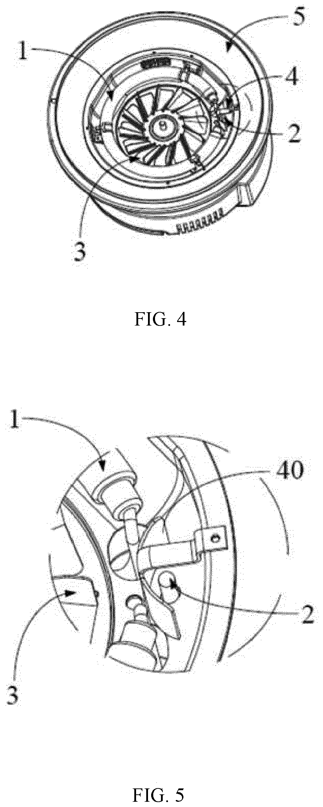

With reference to the Fig. 4 to Fig. 5, the shielding cover 4 can be fixed to the lower shell 9 by bolts, etc., to facilitate the assembly and disassembly of the shielding cover 4. The material of the shielding cover 4 can be metal and other materials that are light-shielding and resistant to a certain temperature. The shielding cover 4 is located between the heating device 1 and the temperature measuring device 2 to shield the temperature measuring device 2 from the heating device 1 to improve the accuracy of the temperature measurement of the temperature measuring device 2. The shielding cover 4 includes an arc-shaped shielding portion 40, and the shielding portion 40 is shielded around the periphery of the temperature measuring device 2. Where the light-wave tube is in a superior arc, the two ends of the superior arc are two wire-outgoing ends of the light-wave tube, with the temperature measuring device 2 set between the two wire-outgoing ends, to reduce radiation and heating of the temperature measuring device 2 by the light of the light-wave tube.

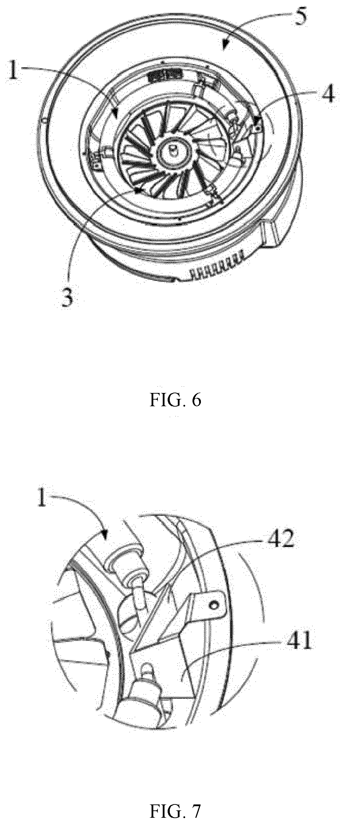

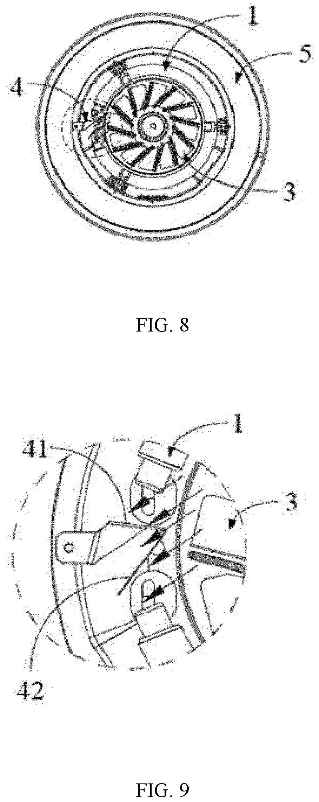

With reference to the Fig. 6 to Fig. 9, in another implementation, the shielding cover 4 includes a first shielding piece 41 and a second shielding piece 42 connected together. The temperature measuring device 2 is located in the space enclosed by the first shielding piece 41 and second shielding piece 42. The included angle between the first shielding piece 41 and second shielding piece 42 is an acute angle. The end point of the acute angle faces the wind and the angle bisector of the included angle is roughly parallel to the wind direction of the wind blown by the fan 3 to thereby reduce the resistance of the shielding cover 4 to the wind blown by the fan 3.

The included angle between the angle bisector of the included angle between the first shielding piece 41 and second shielding piece 42 and the wind direction of the wind blown by the fan 3 is greater than or equal to 0 degrees and less than or equal to 20 degrees to reduce the resistance of the shielding cover 4 to the wind blown by the fan 3.

The fan 3 is a centrifugal fan, where the blades of the centrifugal fan are at an acute angle to the radial direction, so that the wind from the centrifugal fan and the radial direction of the centrifugal fan are at an acute angle; the included angle between the angle bisector of the included angle between the first shielding piece 41 and second shielding piece 42 and the radial direction of the centrifugal fan is greater than or equal to 10 degrees to less than or equal to 80 degrees, to thereby reduce the resistance of the shielding cover 4 to the wind blown by the fan 3.

The air cooking device in the implementations of this application includes a shielding cover 4 between the heating device 1 and the temperature measuring device 2, to shield the heating device 1 from radiating to and heating the temperature measuring device 2, and to thereby improve the accuracy of temperature measurement by the temperature measuring device 2. The shielding cover 4 includes a first shielding piece 41 and a second shielding piece 42 connected together, where the temperature measuring device 2 is located in the space enclosed by the first shielding piece 41 and second shielding piece 42. The included angle between the first shielding piece 41 and the second shielding piece 42 is an acute angle, where the end point of the acute angle faces toward the wind direction, and the angle bisector of the included angle is roughly parallel to the wind direction of the wind blown by the fan 3, to thereby reduce the resistance of the shielding cover 4 to the wind blown by the fan 3.

The above description is only the preferable implementation for this application, and does not impose any formal restriction on this application. Although this application has been disclosed as above with the preferable implementation, it is not used to limit this application. Any technical person who is familiar with this field can use the technical content disclosed above to make some changes or modifications and still fall within the scope of the technical solution of this application. Any simple modifications, equivalent changes and modifications made to the above implementations based on the technical essence of this application that do not deviate from the content of technical solution of this application are still within the scope of the technical solution of this application.

The invention is further described in the following items:
1. An air cooking device equipped with a heating device (1) located above a cooking cavity, and a fan (3), wherein the fan (3) is configured to suck up air in the cooking cavity and blow it toward the heating device (1) to generate hot air, and wherein the hot air blows toward the cooking cavity to cook food, the air cooking device comprising:
   a temperature measuring device (2) to detect the temperature in the cooking cavity; and,
   a shielding cover (4) between the heating device (1) and the temperature measuring device (2);
   wherein the shielding cover (4) shields the heating device (1) from radiating to and heating the temperature measuring device (2).
2. The air cooking device of item 1, wherein the shielding cover (4) includes an arc-shaped shielding portion (40), and the shielding portion (40) is arranged about the periphery of the temperature measuring device (2).
3. The air cooking device of item 1 or 2, wherein:
   the shielding cover (4) includes a first shielding piece (41) and a second shielding piece (42) connected together;
   the temperature measuring device (2) is located in the space enclosed by the first shielding piece (41) and second shielding piece (42);
   the included angle between the first shielding piece (41) and second shielding piece (42) is an acute angle; and,
   the end point of the acute angle faces toward a wind direction of the wind blown by the fan (3), and an angle bisector of the included angle is roughly parallel to the wind direction to thereby reduce the resistance of the shielding cover (4) to the wind blown by the fan (3).
4. The air cooking device of item 3, wherein the included angle between the angle bisector of the included angle between the first shielding piece (41) and the second shielding piece (42) and the wind direction of the wind blown by the fan (3) is greater than or equal to 0 degrees and less than or equal to 20 degrees.
5. The air cooking device of item 3, wherein the fan (3) is a centrifugal fan (3), and blades of the centrifugal fan (3) are at an acute angle to a radial direction of the centrifugal fan (3), so that the wind from the centrifugal fan (3) and the radial direction of the centrifugal fan (3) are at an acute angle, wherein the angle bisector of the included angle between the first shielding piece and second shielding piece and the radial radiation direction is greater than or equal to 10 degrees to less than or equal to 80 degrees.
6. The air cooking device of any preceding item, wherein the heating device (1) includes a light-wave tube arranged in a superior arc, two ends of the superior arc are two wire-outgoing ends of the light-wave tube, and the temperature measuring device (2) is set between the two wire-outgoing ends.
7. The air cooking device of any preceding item, further comprising a transparent portion (5) located above the cooking cavity, wherein the transparent portion (5) is in a ring shape and surrounds the fan (3) and heating device (1) to facilitate observation of cooking in the cooking cavity.
8. The air cooking device of item 6 or 7, further comprising a protective cover (6) under the fan (3), the protective cover (6) having an air inlet (61), an air outlet (62), and a shielding portion (63) located between the air inlet (61) and the air outlet (62), wherein the shielding portion (63) is located under the light-wave tube, to shield the light emitted by the light-wave tube, and to thereby prevent the light emitted by the light-wave tube from directly irradiating the food in the cooking cavity.
9. The air cooking device of any of the items 6-8, wherein the light-wave tube is arranged around the periphery of the fan (3).
10. The air cooking device of item 8 or 9, wherein the position of the air outlet (62) is lower than the position of the air inlet (61).
11. An air frying device positionable above a cooking cavity, the air frying device comprising:
   a light-wave tube;
   a fan (3) configured to suck up air in the cooking cavity and blow it toward the light-wave tube to generate hot air, and wherein the hot air blows toward the cooking cavity to cook food;
   a temperature measuring device (2) to detect the temperature in the cooking cavity; and,
   a shielding cover (4) between the heating device (1) and the temperature measuring device (2);
   wherein the shielding cover (4) shields the light-wave tube from radiating to and heating the temperature measuring device (2).
12. The air frying device of item 11, wherein the shielding cover (4) includes an arc-shaped shielding portion (40), and the shielding portion (40) is arranged about the periphery of the temperature measuring device (2).
13. The air frying device of item 11 or 12, wherein:
   the shielding cover (4) includes a first shielding piece (41) and a second shielding piece (42) connected together;
   the temperature measuring device (2) is located in the space enclosed by the first shielding piece and second shielding piece;
   the included angle between the first shielding piece (41) and second shielding piece (42) is an acute angle; and,
   the end point of the acute angle faces toward a wind direction of the wind blown by the fan (3), and an angle bisector of the included angle is roughly parallel to the wind direction to thereby reduce the resistance of the shielding cover (4) to the wind blown by the fan (3).
14. The air frying device of item 13, wherein the included angle between the angle bisector of the included angle between the first shielding piece and the second shielding piece and the wind direction of the wind blown by the fan (3) is greater than or equal to 0 degrees and less than or equal to 20 degrees.
15. The air frying device of item 13, wherein the fan (3) is a centrifugal fan (3), and blades of the centrifugal fan (3) are at an acute angle to a radial direction of the centrifugal fan (3), so that the wind from the centrifugal fan (3) and the radial direction of the centrifugal fan (3) are at an acute angle, wherein the angle bisector of the included angle between the first shielding piece and second shielding piece and the radial radiation direction is greater than or equal to 10 degrees to less than or equal to 80 degrees.
16. The air frying device of any of the item 11-15, wherein the light-wave tube is arranged in a superior arc, two ends of the superior arc are two wire-outgoing ends of the light-wave tube, and the temperature measuring device (2) is set between the two wire-outgoing ends.
17. The air frying device of any of the items 11-16, further comprising a transparent portion (5) located above the cooking cavity, wherein the transparent portion (5) is in a ring shape and surrounds the fan (3) and heating device (1) to facilitate observation of cooking in the cooking cavity.
18. The air frying device of any of the items 11-17, further comprising a protective cover (6) under the fan (3), the protective cover (6) having an air inlet (61), an air outlet (62), and a shielding portion (63) located between the air inlet and the air outlet, wherein the shielding portion (63) is located under the light-wave tube, to shield the light emitted by the light-wave tube, and to thereby prevent the light emitted by the light-wave tube from directly irradiating the food in the cooking cavity.
19. The air frying device of any of the item 11-18, wherein the light-wave tube is arranged around the periphery of the fan (3).
20. The air frying device of any of the item 11-19, wherein the position of the air outlet (62) is lower than the position of the air inlet (61).

## Claims

1. An air cooking device equipped with a heating device (1) located above a cooking cavity, and a fan (3), wherein the fan (3) is configured to suck up air in the cooking cavity and blow it toward the heating device (1) to generate hot air, and wherein the hot air blows toward the cooking cavity to cook food, the air cooking device comprising:
a temperature measuring device (2) to detect the temperature in the cooking cavity; and,
a shielding cover (4) between the heating device (1) and the temperature measuring device (2);
wherein the shielding cover (4) shields the heating device (1) from radiating to and heating the temperature measuring device (2).

2. The air cooking device of claim 1, wherein the shielding cover (4) includes an arc-shaped shielding portion (40), and the shielding portion (40) is arranged about the periphery of the temperature measuring device (2).

3. The air cooking device of claim 1 or 2, wherein:
the shielding cover (4) includes a first shielding piece (41) and a second shielding piece (42) connected together;
the temperature measuring device (2) is located in the space enclosed by the first shielding piece (41) and second shielding piece (42);
the included angle between the first shielding piece (41) and second shielding piece (42) is an acute angle; and,
the end point of the acute angle faces toward a wind direction of the wind blown by the fan (3), and an angle bisector of the included angle is roughly parallel to the wind direction to thereby reduce the resistance of the shielding cover (4) to the wind blown by the fan (3).

4. The air cooking device of claim 3, wherein the included angle between the angle bisector of the included angle between the first shielding piece (41) and the second shielding piece (42) and the wind direction of the wind blown by the fan (3) is greater than or equal to 0 degrees and less than or equal to 20 degrees.

5. The air cooking device of claim 3, wherein the fan (3) is a centrifugal fan (3), and blades of the centrifugal fan (3) are at an acute angle to a radial direction of the centrifugal fan (3), so that the wind from the centrifugal fan (3) and the radial direction of the centrifugal fan (3) are at an acute angle, wherein the angle bisector of the included angle between the first shielding piece and second shielding piece and the radial radiation direction is greater than or equal to 10 degrees to less than or equal to 80 degrees.

6. The air cooking device of any preceding claim, wherein the heating device (1) includes a light-wave tube arranged in a superior arc, two ends of the superior arc are two wire-outgoing ends of the light-wave tube, and the temperature measuring device (2) is set between the two wire-outgoing ends.

7. The air cooking device of any preceding claim, further comprising a transparent portion (5) located above the cooking cavity, wherein the transparent portion (5) is in a ring shape and surrounds the fan (3) and heating device (1) to facilitate observation of cooking in the cooking cavity.

8. The air cooking device of claim 6 or 7, further comprising a protective cover (6) under the fan (3), the protective cover (6) having an air inlet (61), an air outlet (62), and a shielding portion (63) located between the air inlet (61) and the air outlet (62), wherein the shielding portion (63) is located under the light-wave tube, to shield the light emitted by the light-wave tube, and to thereby prevent the light emitted by the light-wave tube from directly irradiating the food in the cooking cavity.

9. The air cooking device of any of the claims 6-8, wherein the light-wave tube is arranged around the periphery of the fan (3).

10. The air cooking device of claim 8 or 9, wherein the position of the air outlet (62) is lower than the position of the air inlet (61).

11. An air frying device positionable above a cooking cavity, the air frying device comprising:
a light-wave tube;
a fan (3) configured to suck up air in the cooking cavity and blow it toward the light-wave tube to generate hot air, and wherein the hot air blows toward the cooking cavity to cook food;
a temperature measuring device (2) to detect the temperature in the cooking cavity; and,
a shielding cover (4) between the heating device (1) and the temperature measuring device (2);
wherein the shielding cover (4) shields the light-wave tube from radiating to and heating the temperature measuring device (2).

12. The air frying device of claim 11, wherein the shielding cover (4) includes an arc-shaped shielding portion (40), and the shielding portion (40) is arranged about the periphery of the temperature measuring device (2).

13. The air frying device of claim 11 or 12, wherein:
the shielding cover (4) includes a first shielding piece (41) and a second shielding piece (42) connected together;
the temperature measuring device (2) is located in the space enclosed by the first shielding piece and second shielding piece;
the included angle between the first shielding piece (41) and second shielding piece (42) is an acute angle; and,
the end point of the acute angle faces toward a wind direction of the wind blown by the fan (3), and an angle bisector of the included angle is roughly parallel to the wind direction to thereby reduce the resistance of the shielding cover (4) to the wind blown by the fan (3).

14. The air frying device of claim 13, wherein the included angle between the angle bisector of the included angle between the first shielding piece and the second shielding piece and the wind direction of the wind blown by the fan (3) is greater than or equal to 0 degrees and less than or equal to 20 degrees.

15. The air frying device of claim 13, wherein the fan (3) is a centrifugal fan (3), and blades of the centrifugal fan (3) are at an acute angle to a radial direction of the centrifugal fan (3), so that the wind from the centrifugal fan (3) and the radial direction of the centrifugal fan (3) are at an acute angle, wherein the angle bisector of the included angle between the first shielding piece and second shielding piece and the radial radiation direction is greater than or equal to 10 degrees to less than or equal to 80 degrees.
